# EUROPÄISCHE PATENTSCHRIFT

(11) **EP 3 631 619 B1**
(45) Veröffentlichungstag und Bekanntmachung des Hinweises auf die Patenterteilung: **20.07.2022**
(21) Anmeldenummer: 18713625.4
(22) Anmeldetag: 22.03.2018
(51) Int. Cl.: G06F 8/654, G06F 8/61, G06F 8/60, B60T 17/22, B60T 8/88

(54) **VERFAHREN ZUM VERWALTEN EINER STEUERUNGSSOFTWARE EINES BREMSSYSTEMS EINES FAHRZEUGS, HYDRAULIKSYSTEM FÜR EIN BREMSSYSTEM EINES FAHRZEUGS UND VERFAHREN ZUM HERSTELLEN DESSELBEN**
METHOD FOR MANAGING CONTROL SOFTWARE OF A BRAKING SYSTEM OF A VEHICLE, HYDRAULIC SYSTEM FOR A BRAKING SYSTEM OF A VEHICLE AND METHOD FOR PRODUCING SAME
PROCÉDÉ DE GESTION D'UN LOGICIEL DE COMMANDE D'UN SYSTÈME DE FREINAGE D'UN VÉHICULE, SYSTÈME HYDRAULIQUE D'UN SYSTÈME DE FREINAGE D'UN VÉHICULE ET PROCÉDÉ DE FABRICATION DE CELUI-CI

(30) Priorität: 31.05.2017 DE 102017209104
(43) Veröffentlichungstag der Anmeldung: 08.04.2020
(73) Patentinhaber: Robert Bosch GmbH, 70442 Stuttgart (DE)
(72) Erfinder: BACKES, Lothar, 74360 Ilsfeld (DE); HOEHN, Juergen, 74232 Abstatt (DE)
(86) Internationale Anmeldenummer: PCT/EP2018/057355
(87) Internationale Veröffentlichungsnummer: WO 2018/219518

(56) Entgegenhaltungen:
- DE-A1- 4 028 561
- DE-A1-102015 115 855
- US-A1- 2009 119 657

## Beschreibung

Verfahren zum Verwalten einer Steuerungssoftware eines Bremssystems eines Fahrzeugs, Hydrauliksystem für ein Bremssystem eines Fahrzeugs und Verfahren zum Herstellen desselben.

### Gebiet der Erfindung

Die Erfindung betrifft ein Verfahren zum Verwalten einer Steuerungssoftware eines Bremssystems eines Fahrzeugs, ein Hydrauliksystem für ein Bremssystem für ein Fahrzeug und ein Verfahren zum Herstellen eines Hydrauliksystems für ein Bremssystem.

### Stand der Technik

Bei einem Bremssystem, wie einem ESP-System wird während der Produktion des Systems eine auf ein spezifisches Fahrzeugmodell abgestimmte Steuerungssoftware aufgespielt. Dadurch ist die Steuerungssoftware auf einem Stand, der zur Zeit der Produktion aktuell ist.

In der US 2009/0119657 A1 wird ein Verfahren zum Upgraden von Software beschrieben. In der DE 10 2015 115 855 A1 werden ein System und Verfahren zur Verteilung und/oder Aktualisierung von Software in vernetzten Steuereinrichtungen eines Fahrzeugs beschrieben. In der DE 40 28 561 A1 werden ein Verfahren und eine Vorrichtung zur statischen Prüfung der einzelnen Komponenten eines Antiblockierschutz- und/oder Antriebsschlupfregelungssystems in einem Kraftfahrzeug beschrieben.

### Offenbarung der Erfindung

Vor diesem Hintergrund werden mit dem hier vorgestellten Ansatz ein Verfahren zum Verwalten einer Steuerungssoftware eines Bremssystems eines Fahrzeugs, ein Hydrauliksystem für ein Bremssystem für ein Fahrzeug, sowie schließlich ein Verfahren zum Herstellen eines Hydrauliksystems für ein Bremssystem gemäß den unabhängigen Ansprüchen vorgestellt. Vorteilhafte Weiterbildungen und Verbesserungen des hier vorgestellten Ansatzes sind in den abhängigen Ansprüchen beschrieben.

### Vorteile der Erfindung

Ausführungsformen der vorliegenden Erfindung können in vorteilhafter Weise ermöglichen, eine Steuerungssoftware für ein Bremssystem, insbesondere für ein ESP zu verbessern, bis ein Fahrzeug endmontiert wird. Dadurch können die Parameter der Steuerungssoftware genauer festgelegt werden. Beispielsweise kann so auf Veränderungen am Fahrzeugtyp im Laufe eines Produktionszeitraums reagiert werden. Weiterhin kann eine Lagerhaltung vereinfacht werden, da ein Hydrauliksystemtyp gemäß dem hier vorgestellten Ansatz in unterschiedliche Fahrzeugtypen eingebaut werden kann.

Es wird ein Verfahren gemäß Anspruch 1 zum Verwalten einer Steuerungssoftware eines Bremssystems eines Fahrzeugs vorgestellt.

Weiterhin wird ein Hydrauliksystem gemäß Anspruch 7 für ein Bremssystem vorgestellt

Ferner wird ein Verfahren gemäß Anspruch 8 zum Herstellen eines Hydrauliksystems für ein Bremssystem eines Fahrzeugs vorgestellt.

Ideen zu Ausführungsformen der vorliegenden Erfindung können unter anderem als auf den nachfolgend beschriebenen Gedanken und Erkenntnissen beruhend angesehen werden.

Zum Beeinflussen der Fahrstabilität über ein Bremssystem, insbesondere ein ESP-System stehen bei allen Fahrzeugtypen die Bremsen zur Verfügung. Die Bremsen werden hydraulisch angesteuert. Solange ein Fahrzeug vier Räder aufweist sind die Hydrauliksysteme verschiedener Fahrzeugtypen mechanisch und elektrisch sehr ähnlich. Die Hydrauliksysteme weisen im Wesentlichen für jede Bremse eine Gruppe einzeln ansteuerbares Hydraulikventile auf. Die Hydraulikventile werden in unterschiedlichen Fahrzeugtypen über unterschiedliche Steuerungssoftware fahrzeugspezifisch angesteuert. In der fahrzeugangepassten Steuerungssoftware sind erfindungsgemäß fahrzeugspezifische Geometrieverhältnisse, Masseverteilungen und/oder Leistungsdaten berücksichtigt.

Die Steuerungssoftware ist in einem nicht volatilen Speicher eines Steuergeräts des Bremssystems gespeichert. Der Speicher kann beispielsweise ein ROM PROM oder insbesondere ein EPROM sein. Dieser Speicher kann während der Produktion des Steuergeräts oder während der Produktion des Hydrauliksystems initial beschrieben werden. Bei dem hier vorgestellten Ansatz wird bei der Produktion eine allgemeine Steuerungssoftware eingespeichert. Die allgemeine Steuerungssoftware ermöglicht beispielsweise einen Systemtest des Bremssystems bei der Produktion des Fahrzeugs.

Wenn das Fahrzeug zusammengebaut wird, werden seine Komponenten zusammengefügt und angeschlossen. Sobald ein Hydrauliksystem eingebaut ist, steht endgültig fest, in welchem Fahrzeugtyp es verbaut ist. Nach dem Einbau können elektrische Komponenten bereits mit elektrischer Energie versorgt werden. So können die Komponenten ab diesem Zeitpunkt eine Initialisierungssequenz durchlaufen, während das Fahrzeug weiter montiert wird. Bevor das Fahrzeug an den Kunden übergeben wird, kann das hier vorgestellte Verfahren ausgeführt werden. Unter Flashen kann ein Überschreiben von in einem Festwertspeicher (ROM, PROM, EPROM) des Steuergeräts gespeicherten Daten verstanden werden. Dabei kann die allgemeine Steuerungssoftware gelöscht werden und mit einer zu dem Zeitpunkt aktuellen Version der endgültigen Steuerungssoftware für diesen Fahrzeugtyp überschrieben werden. Der Festwertspeicher kann zuvor auch nur partiell beschrieben sein.

Das Verfahren kann einen Schritt des Startens aufweisen, in dem ein vorinstallierter Bootmanager des Bremssystems gestartet wird, wobei der Bootmanager die Schritte des Herunterladens und des Flashens steuert und absichert. Der Bootmanager kann das Flashen auslösen, indem die vorher im Steuergerät gespeicherte Steuerungssoftware gelöscht wird. Anschließend kann der geleerte Speicher des Steuergeräts mit der fahrzeugangepassten Steuerungssoftware beschrieben werden.

Im Schritt des Flashens kann eine vorinstallierte fahrzeugunangepasste Steuerungssoftware überschrieben werden. Durch das Flashen kann das Bremssystem seinen vollen Funktionsumfang erhalten.

Das Herunterladen kann auf einem Zentralsystem des Fahrzeugs über eine Schnittstelle des Zentralsystems zu dem Bremssystem ausgeführt werden. Beispielsweise kann ein Zentralsystem ein Navigationssystem oder ein Infotainmentsystem des Fahrzeugs sein. Das Zentralsystem kann eine mobile Datenverbindung zu dem Server aufbauen. Das Zentralsystem kann auch für die Sicherheit der Datenverbindung sorgen, beispielsweise durch einen Virenscan und/oder eine Firewall.

Der Schritt des Flashens kann ausgeführt werden, wenn das Fahrzeug abgeschaltet ist. Das Flashen kann ausgeführt werden, wenn das Fahrzeug steht. Dadurch kann sichergestellt werden, dass das Bremssystem immer funktionsbereit ist.

Die Schritte des Herunterladens und Flashens können erneut ausgeführt werden, wenn eine aktualisierte fahrzeugangepasste Steuerungssoftware verfügbar ist. Dabei kann im Schritt des Herunterladens die aktualisierte fahrzeugangepasste Steuerungssoftware heruntergeladen werden. Im Schritt des Flashens kann das Steuergerät auf die aktualisierte Steuerungssoftware geflasht werden. Durch ein nachträgliches Aktualisieren der Steuerungssoftware können Verbesserungen der Steuerungssoftware ohne einen Werkstattbesuch erreicht werden.

Das Verfahren zum Herstellen kann einen Schritt des Deaktivierens aufweisen, in dem die Prüf- und Testsoftware für das Steuergerät und die Prüf- und Testsoftware für das Hydrauliksystem deaktiviert werden. Die durch die Prüf- und Testsoftware angesteuerten Sequenzen können im verbauten Steuergerät nicht mehr ausgeführt werden. Daher ist die Prüf- und Testsoftware nicht mehr erforderlich. Die Prüf- und Testsoftware kann auch gelöscht werden, um Speicherplatz im Steuergerät freizumachen.

Vor dem Schritt des Prüfens der mechanischen Funktion des Hydrauliksystems kann unter Verwendung des Bootmanagers von der Prüf- und Testsoftware für das Steuergerät auf die Prüf- und Testsoftware für das Hydrauliksystem umgeschaltet werden. Die durch die Prüf- und Testsoftware für das Steuergerät angesteuerte Sequenz kann im zusammengebauten Hydrauliksystem nicht mehr ausgeführt werden. Daher sind die Prüf- und Testsoftware und der hierzu erforderliche Bootmanager nicht mehr erforderlich.

Es wird darauf hingewiesen, dass einige der möglichen Merkmale und Vorteile der Erfindung hierin mit Bezug auf unterschiedliche Ausführungsformen als Verfahren zum Verwalten, als Steuergerät und als Verfahren zum Herstellen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Ablaufdiagramm einer Produktion eines Steuergeräts für ein Hydrauliksystem gemäß einem Ausführungsbeispiel;
Fig. 2 zeigt ein Ablaufdiagramm einer Produktion eines Hydrauliksystems gemäß einem Ausführungsbeispiel; und
Fig. 3 zeigt ein Ablaufdiagramm einer Montage eines Fahrzeugs mit einem Hydrauliksystem gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

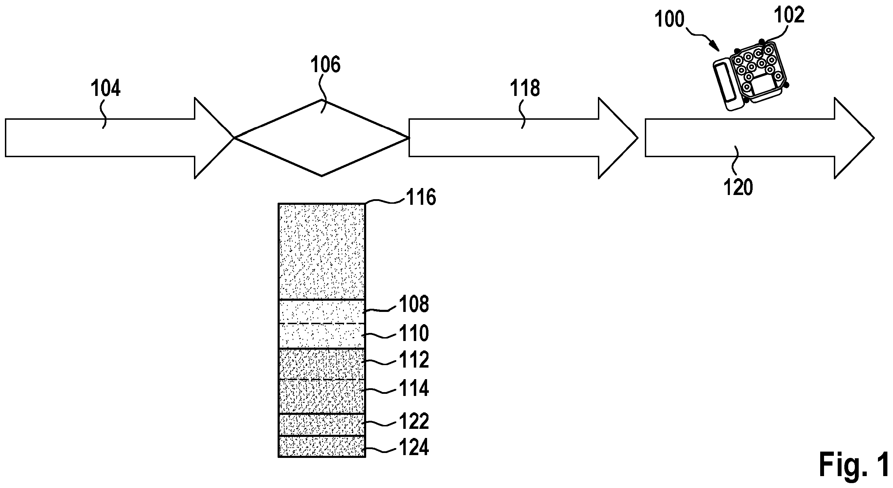

Fig. 1 zeigt ein Ablaufdiagramm einer Produktion eines Steuergeräts 100 für ein Hydrauliksystem gemäß einem Ausführungsbeispiel. Das Steuergerät 100 ist dabei mit einer Aktoreinheit 102 zum Ansteuern von Ventilen einer Hydraulikeinheit verbunden. Das Hydrauliksystem ist Bestandteil eines Bremssystems eines Fahrzeuges. Im Bremssystem ist ein Fahrerassistenzsystem, wie beispielsweise ESP umgesetzt. Die Aktoreinheit 102 weist hier elektrische Spulen für Magnetventile der Hydraulikeinheit auf. Das Steuergerät 100 und die Aktoreinheit 102 werden in einem Schritt 104 des Fertigens als gemeinsame Baugruppe gefertigt.

Während der Fertigung 104 wird das Steuergerät 100 in einem Schritt 106 des Programmierens mit einer Prüf- und Testsoftware 108 programmiert. Die Prüf- und Testsoftware 108 wird mit mehreren Unterprogrammen 110, 112, 114 in einen Speicher 116 des Steuergeräts 100 geschrieben. Die Prüf- und Testsoftware 108 belegt dabei nur einen geringen Anteil des Speichers 116. Das Programmieren 106 dauert so nur kurz. Diese Prüf- und Test-SW besteht aus Unterprogrammen 110, 112, 114 für die elektronischen Funktionen sowie zum Überprüfen der hydraulischen Funktionen, ggfs. eines Bootmanagers 114 zum Aktivieren beziehungsweise Deaktivieren der einzelnen Unterprogramme 110, 112, 114. Die Unterprogramme 110, 112, 114 sind dabei einzeln aktivierbar. Für die Produktion des Steuergeräts 100 wird im Schritt 106 des Programmierens die Elektronikprüfsoftware 110 aktiviert.

In einem nachfolgenden Schritt 118 des Prüfens werden die einzelnen Komponenten des Steuergeräts 100 und der Aktoreinheit 102 im unverbauten Zustand unter Verwendung der Elektronikprüfsoftware 110 auf ihre bestimmungsgemäße Funktion geprüft. Beispielsweise wird überprüft, ob alle Komponenten elektrisch kontaktiert sind.

Wenn bei der Prüfung 118 die bestimmungsgemäße Funktion erkannt worden ist, werden das Steuergerät 100 und die Aktoreinheit 102 in einem Schritt 120 ausgeliefert.

In einem Ausführungsbeispiel wird im Schritt 106 des Programmierens als Unterprogramm ferner eine Montagetestsoftware 122 zum Überprüfen der Komponenten des Gesamtsystems bei der Montage in das Fahrzeug in den Speicher 116 geschrieben und deaktiviert.

In einem Ausführungsbeispiel wird im Schritt 106 des Programmierens ferner eine nicht an einen Fahrzeugtyp angepasste beziehungsweise fahrzeugunangepasste Steuerungssoftware 124 in den Speicher 116 geschrieben. Die fahrzeugunangepasste Steuerungssoftware stellt eine Basisfunktionalität des Bremssystems bereit, wenn das Hydrauliksystem im Fahrzeug verbaut ist. Beispielsweise bietet die fahrzeugunangepasste Steuerungssoftware 124 Schnittstellen zu einer Elektronik des Fahrzeugs, wie sie durch eine fahrzeugangepasste Steuerungssoftware bereitgestellt werden. Durch diese Basisfunktionalität des Bremssystems kann das Fahrzeug bei der Produktion bewegt werden, ohne dass es zu Fehlermeldungen der Fahrzeugelektronik kommt. Die fahrzeugunangepasste Steuerungssoftware 124 weist einen geringen Speicherbedarf auf.

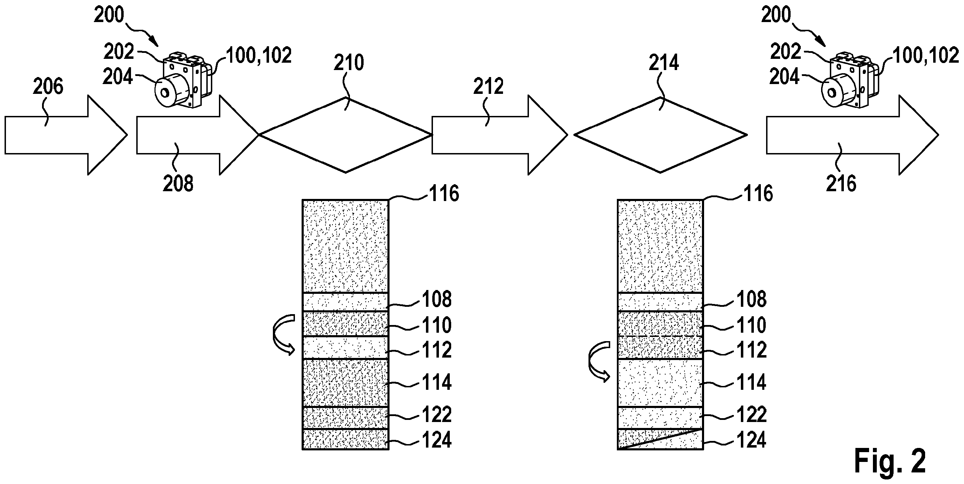

Fig. 2 zeigt ein Ablaufdiagramm einer Produktion eines Hydrauliksystems 200 gemäß einem Ausführungsbeispiel. Das Hydrauliksystem 200 besteht dabei aus einem Steuergerät 100 und einer Aktoreinheit 102, wie sie in Fig. 1 beschrieben sind, sowie einem Hydraulikblock 202. Der Hydraulikblock 202 umfasst dabei auch eine Hydraulikpumpe, die von einem Elektromotor 204 des Hydrauliksystems 200 angetrieben wird.

Der Hydraulikblock 202 mit dem Elektromotor 204 wird in einem Schritt 206 des Fertigens gefertigt. In einem Schritt 208 des Montierens werden das Steuergerät 100 und die Aktoreinheit 102 mit dem Hydraulikblock 202 und dem Elektromotor 204 verbunden.

In einem Schritt 210 des Programmierens oder Umschaltens wird der Bootmanager 114 verwendet, um die Elektronikprüfsoftware 110 zu deaktivieren und die Kompletttestsoftware 112 zu aktivieren. Da die komplette Prüf- und Testsoftware 108 bereits während der Produktion des Steuergeräts 100 in den Speicher 116 geschrieben worden ist, benötigt das Programmieren oder Umschalten 210 nur sehr wenig Zeit.

Das Programmieren kann ebenso bereits bei der Produktion des Steuergeräts 100 vor dem Ausliefern des Steuergeräts 100 mit der Aktoreinheit 102 erfolgt sein. Dann kann der Schritt 210 übersprungen werden.

In einem nachfolgenden Schritt 212 des Prüfens wird das Hydrauliksystem 200 unter Verwendung der Kompletttestsoftware 112 auf seine bestimmungsgemäße Funktion geprüft. Beispielsweise werden die Magnetventile betätigt und Endlagen der Verschlussteile der Magnetventile aufgezeichnet. Im Schritt 212 des Prüfens kann das Hydrauliksystem 200 auch an ein Prüfsystem angeschlossen und mit Hydraulikfluid versorgt werden. Über das Prüfsystem können zum Kalibrieren des Hydrauliksystems 200 beispielsweise Kennlinien der Pumpe und/oder der Magnetventile aufgezeichnet werden. Die aufgezeichneten Daten können in dem Steuergerät 100 abgespeichert werden.

Wenn das Hydrauliksystem 200 bestimmungsgemäß funktioniert, wird der Bootmanager 114 in einem weiteren Schritt 214 des Programmierens erneut verwendet. Dabei wird die Kompletttestsoftware 112 deaktiviert und der Bootmanager 114 aktiviert. Nach dem Umprogrammieren 214 wird das Hydrauliksystem 200 in einem Schritt 216 des Auslieferns ausgeliefert.

In einem Ausführungsbeispiel wird im weiteren Schritt 214 des Programmierens anstatt des Bootmanagers 114 die Montagetestsoftware 122 aktiviert, über die der bestimmungsgemäße Einbau des Hydrauliksystems in das Fahrzeug überwacht werden kann.

In einem Ausführungsbeispiel wird im weiteren Schritt 214 des Programmierens der Bootmanager 114 verwendet, um die fahrzeugunangepasste Steuerungssoftware 124 zu aktivieren. Die fahrzeugunangepasste Steuerungssoftware 124 bildet nach außen die erwarteten Schnittstellen zum Fahrzeug ab, wie es auch eine fahrzeugangepasste Steuerungssoftware machen würde. Dadurch werden Fehlermeldungen bei der Montage vermieden, da die Fahrzeugelektronik wie erwartet mit dem Hydrauliksystem 200 kommunizieren kann.

Mit anderen Worten erfolgt im Werk für das Hydrauliksystem 200 eine Überprüfung des Gesamtsystems 200 mithilfe der bereits im Werk für das Steuergerät ECU 100 aufgespielten Prüf- und Testsoftware 108. Alleine mittels eines Bootloaders 114 wird hierbei von dem im Steuergerätewerk benötigten Unterprogramm 110 auf das im Hydrauliksystemwerk benötigten Unterprogramm 112 umgeschaltet. Als Konsequenz erfolgen in diesem Fertigungsablauf alle Prüfschritte mit einer einheitlichen Software SW 108, welche keine kundenspezifischen Merkmale enthält.

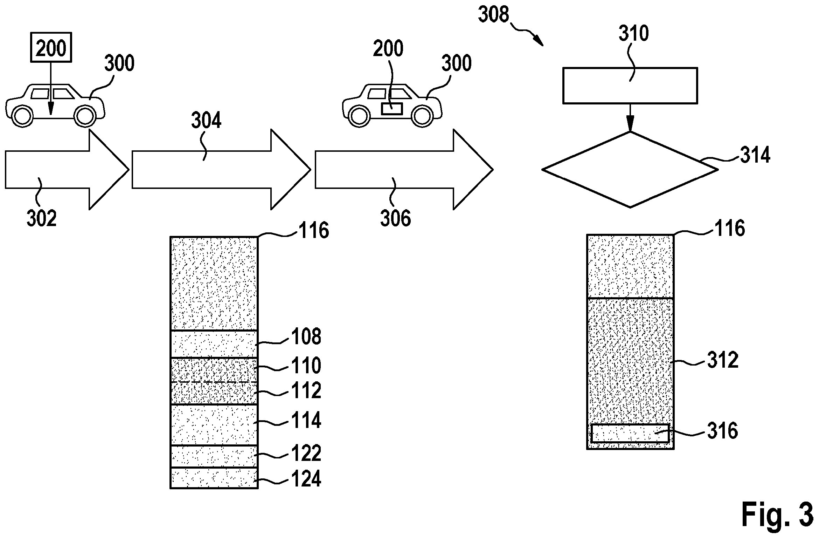

Fig. 3 zeigt ein Ablaufdiagramm einer Montage eines Fahrzeugs 300 mit einem Hydrauliksystem 200 gemäß einem Ausführungsbeispiel. Das Hydrauliksystem 200 entspricht dabei im Wesentlichen dem in Fig. 2 beschriebenen Hydrauliksystem. Die eigentliche Montage findet in einem Schritt 302 des Einbauens statt. Dabei wird das Hydrauliksystem 200 im Fahrzeug 300 angeordnet, befestigt und mit den Systemen des Fahrzeugs 300 verbunden. Zusammen mit den Bremsen und Sensoren an den Rädern bildet das Hydrauliksystem 200 ein Bremssystem mit einem elektronischen Bremssystem des Fahrzeugs 300 aus.

In einem nachfolgenden Schritt 304 des Prüfens werden die Systeme des Fahrzeugs 300 im Fahrzeug 300 geprüft. Dabei wird auch das Hydrauliksystem 200 überprüft. Wenn die Systeme überprüft worden sind und sie wie erwartet funktionieren, wird das Fahrzeug 300 in einem Schritt 306 des Auslieferns ausgeliefert.

Bevor das Fahrzeug 300 endgültig an seinen Nutzer übergeben wird, wird ein Verfahren 308 zum Verwalten der Steuerungssoftware 124 des Bremssystems ausgeführt. Dabei wird in einem Schritt 310 des Herunterladens eine fahrzeugangepasste Steuerungssoftware 312 über eine drahtlose Schnittstelle des Fahrzeugs 300 von einem Server heruntergeladen. In einem nachfolgenden Schritt 314 des Flashens wird das Steuergerät des Bremssystems auf die fahrzeugangepasste Steuerungssoftware 312 geflasht. Beim Flashen 314 wird der Speicher 116 des Steuergeräts zumindest teilweise gelöscht und mit der fahrzeugangepassten Steuerungssoftware 312 überschrieben. Dabei werden auch die Prüf- und Testsoftware Unterprogramme 108 bis 112 gelöscht.

Das Verfahren 308 zum Verwalten kann bereits ausgeführt werden, sobald das Hydrauliksystem 200 elektrisch kontaktiert ist. In einem Ausführungsbeispiel wird das Verfahren 308 zum Verwalten anschließend an den Schritt 304 des Prüfens ausgeführt.

In einem Ausführungsbeispiel wird das Verfahren 308 zum Verwalten erneut ausgeführt, wenn eine neuere Version der fahrzeugangepassten Steuerungssoftware 312 verfügbar ist. Dabei wird erneut über die drahtlose Datenschnittstelle zugegriffen und die neuere Version heruntergeladen. Anschließend wird erneut der Schritt 314 des Flashens ausgeführt und das Steuergerät auf die neue Version der fahrzeugangepassten Steuerungssoftware 312 geflasht. Das Flashen 314 kann dabei ausgeführt werden, wenn das Fahrzeug 300 abgestellt ist. Das Flashen 314 kann auch ausgeführt werden, während das Fahrzeug in Benutzung ist. Dann wird das Flashen ausgeführt, wenn kein Regeleingriff des Bremssystems erforderlich ist, also beispielsweise bei Stillstand des Fahrzeugs 300.

In einem Ausführungsbeispiel wird im Schritt 310 des Herunterladens ein Diagnoseprogramm 316 zusätzlich zu der Steuerungssoftware 312 heruntergeladen und im Schritt 314 des Flashens mit in den Speicher 116 geschrieben. Nach dem Flashen 314 wird das Diagnoseprogramm 316 ausgeführt. Wenn ein Fehler erkannt wird, kann das Verfahren 308 erneut ausgeführt werden.

Mit anderen Worten verbaut der Fahrzeughersteller das System 200, prüft mithilfe von Diagnose und Band-Ende Prüfungen seinen Fahrzeugzusammenbau und liefert das Fahrzeug 300 aus. Vor Auslieferung des Fahrzeugs 300 an den Abnehmer erfolgt ein Flashvorgang 314, bei dem die finale Software 312 aufgespielt wird. Der Zeitraum zwischen der Produktion des Systems 200 und dem Verbau im Fahrzeug 300 bzw. der finalen Inbetriebnahme kann zur Weiterentwicklung der Software 312 genutzt werden, was zur Einsparung von Vorlaufzeiten führt.

Durch den hier vorgestellten Ansatz kann mittels FOTA Technologie (Flashing over the Air) ein Softwareupdate an den im Feld ausgelieferten Systemen 200 durchgeführt werden. Die Auslieferung des Systems 200 erfolgt ohne eine funktionierende Gesamtsoftware, das Produkt 200 wird erst vollständig funktionsfähig durch den ersten FOTA Vorgang 314. Dadurch können die Werksprozesse bei der Herstellung des Systems 200 mit einer fahrzeugunabhängigen, einheitlichen und frei änderbaren Prüf-Software 108 durchlaufen werden. Diese beinhaltet neben den Prüfanteilen 110, 112 die Fähigkeit per FOTA überschrieben zu werden und erfüllt die zu diesem Zeitpunkt erforderlichen und aktuellsten Security Anforderungen.

Bei Bedarf kann eine rudimentäre Funktionalität 124 bereitgestellt werden, welche idealerweise fahrzeugübergreifend einheitlich ausfallen kann. Die eingeschränkte Funktion umfasst dabei zumindest ein Backup-EBD, eine Drehzahlfühleraufbereitung und eine Ausgabe des Tachosignals. Das Produkt 200 ist solange nicht voll funktionsfähig, wie kein FOTA Vorgang 314 sattgefunden hat.

Bei der Herstellung des Hydrauliksystems 200 muss nur ein Teilbereich des Speichers 116 programmiert werden. Das Gesamtsystem 200 kann ohne direkte Zuordnung zu einem spezifischen Fahrzeug produziert werden, die finale Festlegung auf das Zielfahrzeug erfolgt erst nach der Montage 302 im Fahrzeug 300. Dabei kann ein Fahrzeughersteller das absolut gleiche Bremssystem 200 in verschiedenen Fahrzeugen 300 einsetzen. Die erforderlichen Unterschiede in der Funktionalität werden erst beim Flashen 314 der Steuerungssoftware 321 aufgespielt, solange die Hardware gleich ist. Das Hydrauliksystem 200 ist updatefähig.

Der hier vorgestellte Ansatz ist an einem Bremssystem mit ESP beschrieben. Er kann auch bei anderen Systemen im Fahrzeug 300, wie Motorsteuerung, Navigationssystemen, Instrumenten verwendet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren (308) zum Verwalten einer Steuerungssoftware (124, 312) eines Bremssystems eines Fahrzeugs (300), **dadurch gekennzeichnet, dass** die Steuerungssoftware anfänglich als fahrzeugunangepasste Steuerungssoftware in ein Steuergerät vorinstalliert ist und dass in einem Schritt (310) des Herunterladens eine fahrzeugangepasste Steuerungssoftware (312) über eine drahtlose Schnittstelle des Fahrzeugs (300) von einem Server heruntergeladen wird, und vor einem Ausliefern des Fahrzeugs in einem Schritt (314) des Flashens das Steuergerät (100) des Bremssystems auf die fahrzeugangepasste Steuerungssoftware (312) geflasht wird,
wobei die fahrzeugangepasste Steuerungssoftware (312) hinsichtlich Parametern der Steuerungssoftware (312) genauer festgelegt ist, wobei die Parameter fahrzeugspezifische Geometrieverhältnisse, Masseverteilungen und/oder Leistungsdaten umfassen.

2. Verfahren (308) gemäß Anspruch 1, mit einem Schritt des Startens, in dem ein vorinstallierter Bootmanager (314) des Bremssystems (200) gestartet wird, wobei der Bootmanager (314) die Schritte (310, 314) des Herunterladens und des Flashens ansteuert.

3. Verfahren (308) gemäß einem der vorhergehenden Ansprüche, bei dem im Schritt (314) des Flashens die vorinstallierte fahrzeugunangepasste Steuerungssoftware (124) überschrieben wird.

4. Verfahren (308) gemäß einem der vorhergehenden Ansprüche, bei dem der Schritt (310) des Herunterladens auf einem Zentralsystem des Fahrzeugs (300) über eine Schnittstelle des Zentralsystems zu dem Bremssystem ausgeführt wird.

5. Verfahren (308) gemäß einem der vorhergehenden Ansprüche, bei dem der Schritt (314) des Flashens ausgeführt wird, wenn das Fahrzeug (300) abgeschaltet ist.

6. Verfahren (308) gemäß einem der vorhergehenden Ansprüche, bei dem die Schritte (310, 314) des Herunterladens und Flashens erneut ausgeführt werden, wenn eine aktualisierte fahrzeugangepasste Steuerungssoftware (312) verfügbar ist, wobei im Schritt (310) des Herunterladens die aktualisierte fahrzeugangepasste Steuerungssoftware (312) heruntergeladen wird, und im Schritt (314) des Flashens das Steuergerät (100) auf die aktualisierte Steuerungssoftware (312) geflasht wird.

7. Hydrauliksystem (200) für ein Bremssystem eines Fahrzeugs (300), wobei ein Steuergerät (100) des Hydrauliksystems (200) dazu ausgebildet ist, das Verfahren (308) gemäß einem der vorhergehenden Ansprüche in entsprechenden Einrichtungen auszuführen, umzusetzen und/oder anzusteuern.

8. Verfahren zum Herstellen eines Hydrauliksystems (200) für ein Bremssystem eines Fahrzeugs (300), wobei das Verfahren die folgenden Schritte aufweist:
Fertigen (104, 206) eines flashbaren Steuergeräts (100) des Hydrauliksystems (200) und einer Hydraulikeinheit (202) des Hydrauliksystems (200);
Programmieren (106) des Steuergeräts (100) mit einer Prüf- und Testsoftware (110) für das Steuergerät (100), einer Prüf- und Testsoftware (112) für das Hydrauliksystem (200) und einer Prüf- und Testsoftware (122) für Aktoren des Bremssystems, sowie einer fahrzeugunangepassten Steuerungssoftware (124) für das Bremssystem und einem Bootmanager (114) zum Flashen des Steuergeräts (100) mittels eines Verfahrens zum Verwalten der Steuerungssoftware (124) gemäß einem der Ansprüche 1 bis 7 vor einem Ausliefern des Fahrzeugs;
Prüfen (118) einer elektrischen Funktion des Steuergeräts (100) unter Verwendung der Prüf- und Testsoftware (110) für das Steuergerät (100);
Zusammenbauen (208) des Steuergeräts (100) und der Hydraulikeinheit (202) zu dem Hydrauliksystem (200); und
Prüfen (210) einer mechanischen Funktion des Hydrauliksystems (200) unter Verwendung der Prüf- und Testsoftware (112) für das Hydrauliksystem (200).

9. Verfahren gemäß Anspruch 8, mit einem Schritt (214) des Deaktivierens, in dem die Prüf- und Testsoftware (110) für das Steuergerät (100) und die Prüf- und Testsoftware (112) für das Hydrauliksystem (200) deaktiviert werden.

10. Verfahren gemäß einem der Ansprüche 8 bis 9, bei dem vor dem Schritt (210) des Prüfens der mechanischen Funktion des Hydrauliksystems (200) unter Verwendung des Bootmanagers (114) von der Prüf- und Testsoftware (210) für das Steuergerät (100) auf die Prüf- und Testsoftware (212) für das Hydrauliksystem (200) umgeschaltet wird.

## Claims

1. Method (308) for managing control software (124, 312) of a brake system of a vehicle (300), **characterized in that** the control software is initially preinstalled in a controller as control software not adapted to the vehicle and **in that**, in a downloading step (310), control software (312) adapted to the vehicle is downloaded from a server via a wireless interface of the vehicle (300), and, before the vehicle is delivered, in a flashing step (314), the controller (100) of the brake system is flashed to the control software (312) adapted to the vehicle,
wherein the control software (312) adapted to the vehicle is defined more precisely in terms of parameters of the control software (312), wherein the parameters comprise vehicle-specific geometrical conditions, mass distributions and/or performance data.

2. Method (308) according to Claim 1, comprising a booting step in which a preinstalled boot manager (314) of the brake system (200) is booted, wherein the boot manager (314) activates the downloading and flashing steps (310, 314).

3. Method (308) according to either of the preceding claims, in which, in the flashing step (314), the preinstalled control software (124) not adapted to the vehicle is overwritten.

4. Method (308) according to one of the preceding claims, in which the downloading step (310) is carried out on a central system of the vehicle (300) via an interface of the central system to the brake system.

5. Method (308) according to one of the preceding claims, in which the flashing step (314) is carried out when the vehicle (300) is deactivated.

6. Method (308) according to one of the preceding claims, in which the downloading and flashing steps (310, 314) are carried out again when updated control software (312) adapted to the vehicle is available, wherein the updated control software (312) adapted to the vehicle is downloaded in the downloading step (310), and the controller (100) is flashed to the updated control software (312) in the flashing step (314).

7. Hydraulic system (200) for a brake system of a vehicle (300), wherein a controller (100) of the hydraulic system (200) is designed to carry out, implement and/or activate the method (308) according to one of the preceding claims in appropriate devices.

8. Method for producing a hydraulic system (200) for a brake system of a vehicle (300), wherein the method comprises the following steps:
manufacturing (104, 206) a flashable controller (100) of the hydraulic system (200) and a hydraulic unit (202) of the hydraulic system (200);
programming (106) the controller (100) with inspection and test software (110) for the controller (100), inspection and test software (112) for the hydraulic system (200) and inspection and test software (122) for actuators of the brake system, and control software (124) not adapted to the vehicle for the brake system and a boot manager (114) for flashing the controller (100) by way of a method for managing the control software (124) according to one of Claims 1 to 7 before the vehicle is delivered;
testing (118) an electrical function of the controller (100) using the inspection and test software (110) for the controller (100);
assembling (208) the controller (100) and the hydraulic unit (202) to form the hydraulic system (200); and
testing (210) a mechanical function of the hydraulic system (200) using the inspection and test software (112) for the hydraulic system (200).

9. Method according to Claim 8, comprising a deactivation step (214) in which the inspection and test software (110) for the controller (100) and the inspection and test software (112) for the hydraulic system (200) are deactivated.

10. Method according to either of Claims 8 and 9, in which, before the step (210) of testing the mechanical function of the hydraulic system (200) using the boot manager (114), there is a changeover from the inspection and test software (210) for the controller (100) to the inspection and test software (212) for the hydraulic system (200).

## Revendications

1. Procédé (308) de gestion d'un logiciel de commande (124, 312) d'un système de freinage d'un véhicule (300), **caractérisé en ce que** le logiciel de commande est initialement préinstallé dans un appareil de commande en tant que logiciel de commande non adapté au véhicule et **en ce que**, dans une étape (310) de téléchargement, un logiciel de commande adapté au véhicule (312) est téléchargé à partir d'un serveur par le biais d'une interface sans fil du véhicule (300), et avant une livraison du véhicule, dans une étape (314) de flashage, l'appareil de commande (100) du système de freinage est flashé sur le logiciel de commande adapté au véhicule (312) ,
le logiciel de commande adapté au véhicule (312) étant défini plus précisément en ce qui concerne des paramètres du logiciel de commande (312), les paramètres comprenant des rapports géométriques, des répartitions de masse et/ou des données de puissance spécifiques au véhicule.

2. Procédé (308) selon la revendication 1, comprenant une étape de démarrage, dans laquelle un gestionnaire d'amorçage préinstallé (314) du système de freinage (200) est démarré, le gestionnaire d'amorçage (314) commandant les étapes (310, 314) de téléchargement et de flashage.

3. Procédé (308) selon l'une quelconque des revendications précédentes, dans lequel, dans l'étape (314) de flashage, le logiciel de commande (124) préinstallé non adapté au véhicule est écrasé.

4. Procédé (308) selon l'une quelconque des revendications précédentes, dans lequel l'étape (310) de téléchargement est effectuée sur un système central du véhicule (300) par l'intermédiaire d'une interface du système central avec le système de freinage.

5. Procédé (308) selon l'une quelconque des revendications précédentes, dans lequel l'étape (314) de flashage est effectuée lorsque le véhicule (300) est arrêté.

6. Procédé (308) selon l'une quelconque des revendications précédentes, dans lequel les étapes (310, 314) de téléchargement et de flashage sont effectuées à nouveau lorsqu'un logiciel de commande adapté au véhicule mis à jour (312) est disponible, le logiciel de commande adapté au véhicule mis à jour (312) étant téléchargé dans l'étape (310) de téléchargement et l'appareil de commande (100) étant flashé sur le logiciel de commande mis à jour (312) dans l'étape (314) de flashage.

7. Système hydraulique (200) pour un système de freinage d'un véhicule (300), un appareil de commande (100) du système hydraulique (200) étant configuré pour effectuer, mettre en œuvre et/ou commander le procédé (308) selon l'une quelconque des revendications précédentes dans des dispositifs correspondants.

8. Procédé de fabrication d'un système hydraulique (200) pour un système de freinage d'un véhicule (300), le procédé comprenant les étapes suivantes :
la fabrication (104, 206) d'un appareil de commande flash (100) du système hydraulique (200) et d'une unité hydraulique (202) du système hydraulique (200) ;
la programmation (106) de l'appareil de commande (100) avec un logiciel de contrôle et de test (110) pour l'appareil de commande (100), un logiciel de contrôle et de test (112) pour le système hydraulique (200) et un logiciel de contrôle et de test (122) pour les actionneurs du système de freinage, ainsi qu'un logiciel de commande non adapté au véhicule (124) pour le système de freinage et un gestionnaire d'amorçage (114) pour flasher l'appareil de commande (100) au moyen d'un procédé de gestion du logiciel de commande (124) selon l'une quelconque des revendications 1 à 7 avant une livraison du véhicule ;
le contrôle (118) d'une fonction électrique de l'appareil de commande (100) en utilisant le logiciel de contrôle et de test (110) pour l'appareil de commande (100) ;
l'assemblage (208) de l'appareil de commande (100) et de l'unité hydraulique (202) pour former le système hydraulique (200) ; et
le contrôle (210) d'une fonction mécanique du système hydraulique (200) en utilisant le logiciel de contrôle et de test (112) pour le système hydraulique (200).

9. Procédé selon la revendication 8, comprenant une étape (214) de désactivation, dans laquelle le logiciel de contrôle et de test (110) pour l'appareil de commande (100) et le logiciel de contrôle et de test (112) pour le système hydraulique (200) sont désactivés.

10. Procédé selon l'une quelconque des revendications 8 à 9, dans lequel, avant l'étape (210) de contrôle de la fonction mécanique du système hydraulique (200), une commutation du logiciel de contrôle et de test (210) pour l'appareil de commande (100) au logiciel de contrôle et de test (212) pour le système hydraulique (200) est effectuée en utilisant le gestionnaire d'amorçage (114).
